# EUROPÄISCHE PATENTSCHRIFT

(11) **EP 2 876 789 B1**
(45) Veröffentlichungstag und Bekanntmachung des Hinweises auf die Patenterteilung: **23.08.2017**
(21) Anmeldenummer: 14003082.6
(22) Anmeldetag: 06.09.2014
(51) Int. Cl.: H02K 15/03, H02K 1/27, H02K 16/02

(54) **Verfahren zur Herstellung eines Rotors**
Method for manufacturing a rotor
Procédé de fabrication d'un rotor

(30) Priorität: 20.11.2013 DE 102013019318
(43) Veröffentlichungstag der Anmeldung: 27.05.2015
(73) Patentinhaber: Brose Fahrzeugteile GmbH & Co. Kommanditgesellschaft, Würzburg, 97076 Würzburg (DE)
(72) Erfinder: Kurbegovic-Zrnic, Jásmin, DE - 97078 Würzburg (DE); Schumpa, Christian, DE - 97320 Großlangheim (DE)
(74) Vertreter: FDST Patentanwälte

(56) Entgegenhaltungen:
- WO-A1-2012/137465
- DE-A1-102010 041 015

## Beschreibung

Die Erfindung betrifft ein Verfahren zur Herstellung eines Rotors, insbesondere für eine elektrische Maschine eines Kraftfahrzeugs, sowie eine elektrische Maschine mit einem Rotor.

In einem modernen Kraftfahrzeug werden Elektromotoren in vielfältiger Weise zum Antrieb für unterschiedliche Stellelemente eingesetzt. Elektromotoren werden beispielsweise als Fensterheber-, Schiebedach- oder Sitzverstellantriebe, als Lenkungsantriebe, als Kühlerlüfterantriebe oder als Getriebeaktuatoren eingesetzt. Geeignete Elektromotoren müssen in der Regel mit hoher Leistung ein großes Drehmoment bereitstellen und insbesondere auch bei hohen und bei niedrigen Temperaturen betriebssicher sein.

Ein Elektromotor weist üblicherweise einen mit einer Feldwicklung versehenen Stator auf, der koaxial zu einem Rotor mit einem oder mehreren Permanentmagneten angeordnet ist. Sowohl der Rotor als auch der Stator sind gängigerweise als Blechpakete aufgebaut, wobei Statorzähne in dazwischenliegenden Statornuten die Spulen der Feldwicklung tragen. Diese werden angesteuert, um ein Drehfeld zu erzeugen, welches ein Drehmoment am permanent erregten Rotor verursacht.

Aus der DE 10 2008 041 555 A1 ist es bekannt, den Rotor aus gestapelten Einzelblechen bzw. Blechlagen zu fertigen, in die zueinander fluchtende Ausnehmungen zur Bildung von axialen Aufnahmetaschen für permanentmagnetische Magnetkörper eingebracht sind. In radialer Richtung sind die Permanentmagnete durch einen Formschluss in den Ausnehmungen bzw. Aufnahmetaschen fixiert. Zur Axialsicherung der Permanentmagnete, also zur Sicherung in Richtung der Rotationsachse, wird mindestens ein Anschlagblech eingesetzt. Das Anschlagblech weist einen mit den Ausnehmungen der übrigen Einzelblechen überlappenden Anschlag auf.

Das Anschlagblech weicht in seiner Form von den übrigen Blechen ab. Dies verteuert die Herstellkosten und verkompliziert den Montageprozess.

Aus der WO 2012/137465 A1 ist es zur Herstellung eines um eine Rotationsachse drehbaren Rotors bekannt, zumindest zwei Rotorteilkörper mit jeweils einer Anzahl von in Axialrichtung eingebrachten Aufnahmetaschen bereitzustellen und in die Aufnahmetaschen jeweils Magnetkörper mit einer axialen Einpressrichtung einzupressen sowie die Rotorteilkörper derart aneinander zu fügen, dass die Einpressrichtungen der Magnetkörper voneinander weg zeigen.

Der Erfindung liegt als eine erste Aufgabe zugrunde, ein Verfahren zur Herstellung eines Rotors anzugeben, das bei möglichst niedrigen Herstellungskosten eine sichere axiale Fixierung von Magnetkörpern in den Aufnahmetaschen eines Rotors erlaubt. Als eine zweite Aufgabe liegt der Erfindung zugrunde, eine elektrische Maschine mit einem Rotor anzugeben, in dem bei vergleichsweise niedrigen Herstellkosten die Magnetkörper sichere axial fixiert sind. Die Aufgaben werden erfindungsgemäß durch ein Verfahren nach Anspruch 1 und eine elektrische Maschine nach Anspruch 6 gelöst. Ein Verfahren zur Herstellung eines um eine Rotationsachse drehbaren Rotors, insbesondere für eine elektrische Maschine eines Kraftfahrzeugs wird beschrieben, wobei zumindest zwei Rotorteilkörper mit jeweils einer Anzahl von in Axialrichtung eingebrachten Aufnahmetaschen bereitgestellt werden, wobei in die Aufnahmetaschen der Rotorteilkörper jeweils Magnetkörper mit einer axialen Einpressrichtung eingepresst werden, und wobei die Rotorteilkörper derart aneinander gefügt werden, dass die Einpressrichtungen der Magnetkörper voneinander weg zeigen.

Ausgangspunkt bei der Lösungsfindung ist zunächst die Überlegung, dass es möglich ist, Magnetkörper durch ein Einpressen in axialen Aufnahmetaschen eines Rotors mittels einer Pressverbindung zu fixieren. Dazu weisen die Magnetkörper und die Aufnahmetaschen zueinander eine Presspassung auf. Durch Einpressen erfolgt eine zumindest zum Teil elastische Verformung der Presspartner. Im eingepressten Zustand sind die Magnetkörper insbesondere in axialer Rich tung durch elastische Rückstellkräfte kraftschlüssig in den Aufnahmetaschen gehalten. Eigene Untersuchungen haben jedoch gezeigt, dass die eingepressten Magnetkörper im Betrieb eines Rotors bei Temperaturwechselbeanspruchung in axialer Richtung aus den Aufnahmetaschen wandern. Dies ist unerwünscht, da hierdurch die Leistungsfähigkeit des Motors reduziert wird oder gegebenenfalls seine Betriebsfähigkeit nicht mehr gewährleistet werden kann. Zusätzlich kann ein solches Wandern der Magnetkörper zu Auffälligkeiten in der Akustik führen.

Weitergehende Untersuchungen haben jedoch überraschend ergeben, dass die in die Aufnahmetaschen eingepressten Magnetkörper bei Temperaturwechselbeanspruchung stets in eine bestimmte Richtung wandern, und zwar in diejenige Richtung, die der Einpressrichtung entgegen gerichtet ist. Offensichtlich wird durch den Einpressvorgang der Magnetkörper in den Aufnahmetaschen eine materialbedingte Asymmetrie geschaffen, so dass die eingepressten Magnetkörper bei einer Temperaturwechselbeanspruchung durch die resultierenden Mikrobewegungen stets gerichtet entgegen der Einpressrichtung aus den Aufnahmetaschen heraus geschoben werden. Durch den Einpressvorgang wird in den Aufnahmetaschen Material in Einpressrichtung verschoben. Es verbleibt ein elastisch verformter Anteil, aus dem bei einer Temperaturwechselbeanspruchung eine Rückstellkraft entgegen der Einpressrichtung resultiert.

Diese Erkenntnis macht sich die Erfindung zunutze. Ein unerwünschtes Wandern der eingepressten Magnetkörper aus den jeweiligen Aufnahmetaschen wird dann sicher verhindert, wenn zwei Rotorteilkörper derart aneinander gefügt werden, dass die Einpressrichtungen der Magnetkörper voneinander weg zeigen. Bei einer Temperaturwechselbeanspruchung im Betrieb wandern die Magnetkörper - entgegen ihrer jeweiligen Einpressrichtung - aufeinander zu und bilden somit einen gegenseitigen Anschlag. Auf diese Weise wird die durch den Einpressvorgang bedingte Asymmetrie genutzt, um die Magnetkörper durch eine Pressverbindung in den Aufnahmetaschen axial sicher zu halten.

Durch viele Untersuchungen konnte gezeigt werden, dass die in die Aufnahmetaschen von zwei Rotorteilkörpern entgegengesetzt eingepressten Magnetkörper auch nach dem Durchlaufen einer Vielzahl von Temperaturschockzyklen keinen axialen Überstand zeigen. Die in die Aufnahmetaschen eingepressten Magnetkörper der aneinander gefügten Rotorteilkörper sichern sich in axialer Richtung gegenseitig. Zusätzlich zentrieren sich die Magnetkörper auf diese Weise selbsttätig im Rotor, wodurch eine Leistungssteigerung des Motors resultiert.

Die Erfindung bietet den großen Vorteil, dass zur Axialsicherung der Magnetkörper in den Aufnahmetaschen keine zusätzlichen Mittel mehr notwendig sind. Insbesondere kann auf Halteelemente, Haltebleche oder sonstige Sicherungsmittel verzichtet werden. Die eingepressten Magnetkörper halten in den Aufnahmetaschen durch Kraftschluss und sichern sich aufgrund der ausgenutzten Asymmetrie zugleich selbst gegen ein axiales Wandern nach außen. Die Material- und Herstellungskosten sind gegenüber dem Stand der Technik reduziert.

Die Anzahl der zur Herstellung eines Rotors eingesetzten Rotorteilkörper ist grundsätzlich nicht begrenzt. Die Erfindung ist auf mehr als zwei Rotorteilkörper übertragbar. Dabei ist es von Vorteil, wenn die Einpressrichtungen der Magnetkörper derjenigen beiden Rotorteilkörper, die im gefügten Rotor stirnseitig angeordnet werden, voneinander weg zeigen.

Die Erfindung ist nicht eingeschränkt auf eine vollumfängliche Presspassung der Magnetkörper in den Aufnahmetaschen. Es genügt, wenn die Presspassung zwischen den Magnetkörpern und den Aufnahmetaschen durch Halteelemente oder durch Haltelaschen gegeben ist, die den Aufnahmetaschen angeformt sind. In diesem Fall erfolgt die kraftschlüssige Verbindung der Magnetkörper durch eine zumindest teilweise elastische Um- oder Verformung der Halteelemente bzw. der Haltelaschen. Ist der Rotor als Blechpaket mit einer Mehrzahl von Blechlagen gefertigt, so können die Halteelemente oder Haltelaschen auch nur einem Teil der Blechlagen angeformt sein.

Die Rotorteilkörper sind in einer Variante über eine beide Teilkörper durchsetzende Welle mittelbar miteinander gefügt. Die Rotorteilkörper können aber auch zusätzlich oder alternativ unmittelbar miteinander durch Kraft-, Form- und/oder Materialschluss gefügt sein.

Die Aufnahmetaschen sind hinsichtlich ihrer Geometrie auf die Geometrie und die Abmessungen der Magnetkörper abgestimmt. Insbesondere können sich die Magnetkörper und die Aufnahmetaschen jeweils in ihrem Querschnitt radial nach außen verjüngen, so dass im Betrieb ein sicherer Radialsitz gegeben ist. Zweckmäßigerweise sind die Magnetkörper als Permanentmagnete gegeben, die bevorzugt aus einer Seltenerd-Legierung, wie beispielsweise aus einer Neodym-Eisen-Bor-Legierung oder aus einer Samarium-Kobalt-Legierung, gefertigt sind.

Erfindungsgemäß sind die Rotorteilkörper mit durch Stanzen in einer axialen Stanzrichtung eingebrachten Aufnahmetaschen bereitgestellt, wobei die Magnetkörper mit einer axialen Einpressrichtung entgegen der Stanzrichtung eingepresst werden. Dazu hat es sich durch weitergehende Untersuchungen gezeigt, dass im Falle des Stanzens der Aufnahmetaschen bereits durch den Stanzvorgang eine materialbezogene Asymmetrie in die Aufnahmetaschen eingebracht wird. Am Stanzrand wird das Material auf der Eintrittsseite des Stanzwerkzeugs durch Materialabtrag gerundet (Einzugsbereich). Nach einem Glattschnittbereich verbleibt auf der Austrittsseite (im Bruchbereich) ein Stanzgrat. Wird der Rotorteilkörper als Blechpaket aus einer Mehrzahl von Blechlagen zusammengesetzt, so gilt diese Asymmetrie für jede einzelne Blechlage, in die die jeweilige Ausnehmung eingestanzt wird. Wegen des sich in Stanzrichtung ausbildenden Stanzgrates werden die Magnetkörper bevorzugt entgegen der Stanzrichtung eingepresst. Auf diese Weise wird ein sicherer axialer Halt der Magnetkörper in den Aufnahmetaschen erreicht. Durch das Einpressen verbiegt sich das Blech und der Stanzgrat wandert in Einpressrichtung. Dadurch ist ein Wandern des Magnetkörpers entgegen der Stanzrichtung bzw. in Einpressrichtung verhindert, wodurch sich eine sichere Pressverbindung ergibt. Auch diese Verformung der Stanzgrate während des Einpressens der Magnetkörper entgegen der Stanzrichtung trägt zu der Asymmetrie bei, die zu einem gerichteten Wandern der Magnetkörper durch die Temperaturwechselbeanspruchung während des Betriebs führt.

Bevorzugt wird ein oder jeder Rotorteilkörper mit entlang des Umfangs einer Kreisbahn verteilt eingebrachten Aufnahmetaschen bereitgestellt. Die Aufnahmetaschen sind hierbei vorzugsweise in Umfangsrichtung gleichverteilt und gleichmäßig voneinander beabstandet. Die Magnetisierungsrichtung der Magnetkörper ist hierbei parallel zur radialen Richtung ausgerichtet. Aus der Anzahl der Magnetkörper resultiert die Polanzahl der elektrischen Maschine.

In einer zweckmäßigen Ausgestaltung der Erfindung werden die Magnetkörper jeweils mit gleicher Einpressrichtung in die Rotorteilkörper eingepresst, wobei zumindest ein Rotorteilkörper vor dem Fügen um eine zur Rotationsachse senkrechte Achse gedreht wird. Eine solche Ausgestaltung ist insbesondere bei automatisierten Herstellungsverfahren für die jeweiligen Rotorteilkörper von Vorteil, wobei die Magnetkörper alle mit gleicher Einpressrichtung in die identisch bereitgestellten Rotorteilkörper oder identisch bereitgestellten Blechlagen eingepresst werden. Nach der Herstellung der Rotorteilkörper wird ein Rotorteilkörper um eine zur Rotationsachse senkrechte Achse gedreht und jeweils mit einem umgedrehten Rotorteilkörper gefügt. Auf diese Weise zeigen die Einpressrichtungen der Magnetkörper der beiden Rotorteilkörper voneinander weg. Abhängig von der Ausrichtung der Magnetkörper und der entsprechend vorzunehmenden Magnetisierung kann es bevorzugt sein, die Magnetkörper erst nach ihrer Einpressung in die Rotorteilkörper zu magnetisieren. Insbesondere ist dies der Fall bei einer nicht radialen Magnetisierungsrichtung der Magnetkörper.

In einer weiter vorteilhaften Ausgestaltung der Erfindung werden die Rotorteilkörper bezogen auf die Rotationsachse um einen Versatzwinkel α gegeneinander verdreht angeordnet. Auch bei einer solchen Anordnung zeigen die Einpressrichtungen der Magnetkörper voneinander weg und verhindern so, dass die Magnetkörper betriebsbedingt aus den Aufnahmetaschen heraus wandern. Die Magnetkörper der Rotorteilkörper sind jedoch zueinander verdreht, was Vorteile für die Performance der elektrischen Maschine haben kann.

Zweckmäßigerweise werden die Rotorteilkörper jeweils als Blechpakete mit einer Mehrzahl von Blechlagen bereitgestellt. Die Blechlagen der Rotorteilkörper werden hierbei einzeln hergestellt, axial gestapelt und anschließend zur Bildung des Blechpakets miteinander verbunden. Die Blechlagen können miteinander verklebt und/oder verschweißt sein. Auch können die Blechlagen durch Stanzgrate mechanisch aneinander gefügt werden oder in axialer Richtung zum Blechpaket verspannt oder verschraubt sein

Die zweite Aufgabe der Erfindung wird erfindungsgemäß gelöst durch eine elektrische Maschine, insbesondere durch einen Elektromotor eines Kraftfahrzeugs, umfassend einen um eine Rotationsachse drehbaren Rotor, der zumindest zwei Rotorteilkörper mit jeweils einer Anzahl von in Axialrichtung eingebrachten Aufnahmetaschen umfasst, wobei in die Aufnahmetaschen der Rotorteilkörper jeweils Magnetkörper mit einer axialen Einpressrichtung eingepresst sind, und wobei die Rotorteilkörper derart aneinander gefügt sind, dass die Einpressrichtungen der Magnetkörper voneinander weg zeigen. Die Aufnahmetaschen sind mit einer axialen Stanzrichtung in die Rotorteilkörper eingebracht, wobei die Magnetkörper mit einer axialen Einpressrichtung entgegen der Stanzrichtung eingepresst sind.

Bevorzugte Ausführungsvarianten finden sich in den auf eine elektrische Maschine gerichteten Unteransprüchen. Dabei können die für das Herstellungsverfahren genannten Vorteile sinngemäß übertragen werden.

Zweckmäßigerweise sind die Aufnahmetaschen eines oder jedes Rotorteilkörpers jeweils entlang des Umfangs einer Kreisbahn verteilt angeordnet. In einer vorteilhaften Ausführungsvariante sind die Rotorteilkörper bezogen auf die Rotationsachse um einen Versatzwinkel α gegeneinander verdreht angeordnet. Die Rotorteilkörper sind bevorzugt jeweils als Blechpaket mit einer Mehrzahl von Blechlagen gefertigt.

Im Folgenden wird ein Ausführungsbeispiel der Erfindung anhand einer Zeichnung näher erläutert.

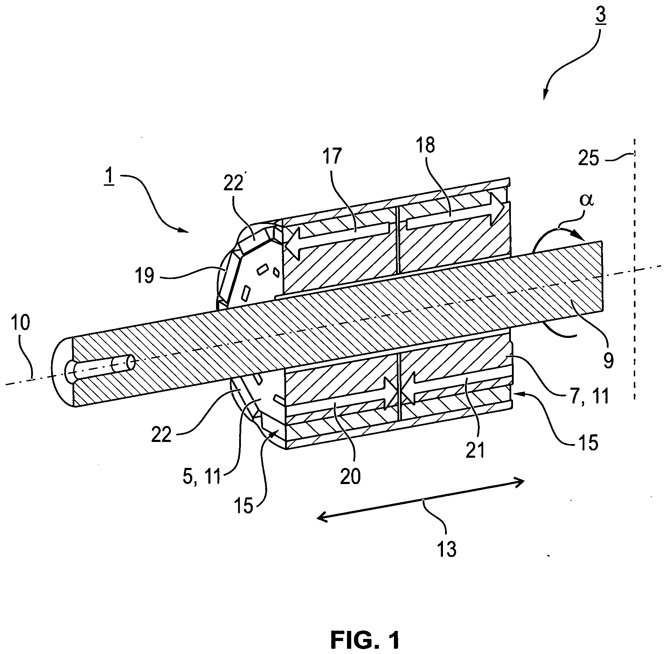

In Fig. 1 ist ein Rotor 1 als Teil einer elektrischen Maschine 3 aus zwei miteinander verbundenen Rotorteilkörpern 5, 7 gezeigt. Der Rotor 1 ist drehfest auf einer Welle 9 angeordnet und im eingebauten Zustand koaxial zu einem nicht dargestellten Stator um die Rotationsachse 10 drehbar angeordnet. Die Rotorteilkörper 5, 7 sind als Blechpakete aus einer Mehrzahl von einzelnen Blechlagen 11 gefertigt. Zur Erhöhung der Übersichtlichkeit sind die Blechlagen 11 nicht einzeln dargestellt.

Beide Rotorteilkörper 5, 7 umfassen eine Anzahl von in Axialrichtung 13 eingebrachten Aufnahmetaschen 15. Die Einbringung der Aufnahmetaschen 15 erfolgt bei der Herstellung der einzelnen Blechlagen 11, indem in jede einzelne Blechlage 11 in axialer Richtung 13 Öffnungen eingestanzt werden. Nach dem Verbinden der Blechlagen 11 entstehen die axialen Aufnahmetaschen 15 jeweils aus den entsprechenden übereinander liegenden, zueinander fluchtenden Öffnungen. Die Öffnungen bzw. die Aufnahmetaschen 15 sind drehsymmetrisch über den Umfang einer Kreisbahn 19 des jeweiligen Rotorteilkörpers 5, 7 verteilt. Die jeweiligen Stanzrichtungen 20, 21 zur Einbringung der Öffnungen sind eingezeichnet.

In die Aufnahmetaschen 15 der Rotorteilkörper 5, 7 sind jeweils als stabförmige Permanentmagnete ausgebildete Magnetkörper 22 aus einer NdFeB-Legierung eingepresst. Die jeweilige axiale Einpressrichtung 17, 18 ist entgegen der axialen Stanzrichtung 20 bzw. 21 gerichtet. Durch den Stanzvorgang und durch den nachfolgenden Einpressvorgang der Magnetkörper 22 resultiert in den Aufnahmetaschen 15 eine materialbedingte Asymmetrie. Als Folge wandern die eingepressten Magnetkörper 22 im Betrieb des Rotors 1 bei Temperaturwechselbeanspruchung gerichtet entgegen ihrer jeweiligen Einpressrichtung 17, 18.

Nach dem Einpressen der Magnetkörper 22 werden die Rotorteilkörper 5, 7 so aneinander gefügt, dass die Einpressrichtungen 17, 18 der Magnetkörper 22 voneinander weg bzw. vorliegend die Stanzrichtungen 20, 21 aufeinander zu zeigen. Hierzu wird bei mit identischer Ausrichtung bereitgestellten Rotorteilkörpern 5, 7 beispielsweise der Rotorteilkörper 7 vor dem Fügen der Rotorteilkörper 5, 7 um eine zur Rotationsachse 10 senkrechte Achse 25 gedreht. Entsprechend ergibt sich das in Figur 1 dargestellte Bild.

Aufgrund einer durch den Stanzvorgang und durch den Einpressvorgang in den Aufnahmetaschen resultierenden materialbedingten Asymmetrie wandern die eingepressten Magnetkörper 22 im Betrieb entgegen ihrer jeweiligen Einpressrichtung 17, 18 bzw. in Richtung der Stanzrichtungen 20, 21. Mit anderen Worten bewegen sich die Magnetkörper 22 der Rotorteilkörper 5, 7 im Betrieb nach innen aufeinander zu. Jeder Magnetkörper 22 stellt somit ein Sicherungselement für den anderen gepaarten Magnetkörper 22 dar. Die eingepressten Magnetkörper 22 sich durch Kraftschluss axial sicher in den Aufnahmetaschen 15 gehalten. Zusätzliche Sicherungselemente entfallen.

Zusätzlich können in der gezeigten Ausführungsvariante die beiden Rotorteilkörper 5, 7 bezogen auf die Rotationsachse 10 auch um einen Versatzwinkel α gegeneinander verdreht angeordnet sein. Die Rotorteilkörper 5, 7 sind vorliegend mittelbar über die gemeinsame Welle 9 mittels eines Pressverbandes miteinander gefügt. Es ist auch möglich, die beiden Rotorteilkörper 5, 7 vor dem drehfesten Verbinden mit der Welle 9 separat mechanisch aneinander zu fügen.

### Bezugszeichenliste

- 1: Rotor
- 3: Elektrische Maschine
- 5: Rotorteilkörper
- 7: Rotorteilkörper
- 9: Rotorwelle
- 10: Rotationsachse
- 11: Blechlage
- 13: Axialrichtung
- 15: Aufnahmetasche
- 17: Einpressrichtung
- 18: Einpressrichtung
- 19: Kreisbahn
- 20: Stanzrichtung
- 21: Stanzrichtung
- 22: Magnetkörper
- 25: senkrechte Achse

## Patentansprüche

1. Verfahren zur Herstellung eines um eine Rotationsachse (10) drehbaren Rotors (1),
- wobei zumindest zwei Rotorteilkörper (5, 7) mit jeweils einer Anzahl von durch Stanzen in einer axialen Stanzrichtung (20, 21) eingebrachten Aufnahmetaschen (15) bereitgestellt werden,
- wobei in die Aufnahmetaschen (15) der Rotorteilkörper (5, 7) jeweils Magnetkörper (22) mit einer axialen Einpressrichtung (17, 18) entgegen der Stanzrichtung (20, 21) eingepresst werden, und
- wobei die Rotorteilkörper (5, 7) derart aneinander gefügt werden, dass die Einpressrichtungen (17, 18) der Magnetkörper (22) voneinander weg zeigen.

2. Verfahren nach Anspruch 1, wobei ein oder jeder Rotorteilkörper (5, 7) mit entlang des Umfangs einer Kreisbahn (19) verteilt eingebrachten Aufnahmetaschen (15) bereitgestellt wird.

3. Verfahren nach einem der vorherigen Ansprüche, wobei die Magnetkörper (22) in die Rotorteilkörper (5, 7) jeweils mit gleicher Einpressrichtung (17, 18) eingepresst werden und wobei zumindest ein Rotorteilkörper (5, 7) vor dem Fügen um eine zur Rotationsachse (10) senkrechte Achse (25) gedreht wird, so dass die Einpressrichtungen (17, 18) der Magnetkörper (22) voneinander weg zeigen.

4. Verfahren nach einem der vorhergehenden Ansprüche, wobei die Rotorteilkörper (5, 7) bezogen auf die Rotationsachse (10) um einen Versatzwinkel α gegeneinander verdreht angeordnet werden.

5. Verfahren nach einem der vorhergehenden Ansprüche, wobei die Rotorteilkörper (5, 7) jeweils als Blechpakete mit einer Mehrzahl von Blechlagen (11) bereitgestellt werden.

6. Elektrische Maschine (3), umfassend einen um eine Rotationsachse (10) drehbaren Rotor (1), der zumindest zwei Rotorteilkörper (5, 7) mit jeweils einer Anzahl von in Axialrichtung (13) eingebrachten Aufnahmetaschen (15) umfasst,
- wobei die Aufnahmetaschen (15) mit einer axialen Stanzrichtung (20, 21) in die Rotorteilkörper (5, 7) eingebracht sind,
- wobei in die Aufnahmetaschen (15) der Rotorteilkörper (5, 7) jeweils Magnetkörper (22) mit einer axialen Einpressrichtung (17, 18) entgegen der Stanzrichtung (20, 21) eingepresst sind, und
- wobei die Rotorteilkörper (5, 7) derart aneinander gefügt sind, dass die Einpressrichtungen (17, 18) der Magnetkörper (22) voneinander weg zeigen.

7. Elektrische Maschine (3) nach Anspruch 6, wobei die Aufnahmetaschen (15) eines oder jedes Rotorteilkörpers (5, 7) jeweils entlang des Umfangs einer Kreisbahn (19) verteilt angeordnet sind.

8. Elektrische Maschine (3) nach Anspruch 6 oder 7, wobei die Rotorteilkörper (5, 7) bezogen auf die Rotationsachse (10) um einen Versatzwinkel α gegeneinander verdreht angeordnet sind.

9. Elektrische Maschine (3) nach einem der Ansprüche 6 bis 8, wobei die Rotorteilkörper (5, 7) jeweils als Blechpaket mit einer Mehrzahl von Blechlagen (11) gefertigt sind.

## Claims

1. Method for producing a rotor (1) which can be rotated about an axis of rotation (10),
- wherein at least two rotor partial bodies (5, 7) are provided with a number of receiving pockets (15) introduced by punching in an axial punching direction (20, 21) in each case,
- wherein respective magnetic bodies (22) are pressed in an axial pressing direction (17, 18) against the stamping direction (20, 21) into the receiving pockets (15) of the rotor partial bodies (5, 7), and
- wherein the rotor partial bodies (5, 7) are joined to each other in such a way that the pressing directions (17, 18) of the magnetic bodies (22) point away from each other.

2. Method according to claim 1, wherein one or each rotor partial body (5, 7) is provided with receiving pockets (15) which are introduced to be distributed along the circumference of a circular path (19).

3. Method according to one of the preceding claims, wherein the magnetic bodies (22) are pressed into the rotor partial bodies (5, 7) in the same pressing direction (17, 18) respectively and wherein at least one rotor partial body (5, 7) is rotated about an axis (25) which is perpendicular to the axis of rotation (10) before joining, such that the pressing directions (17, 18) of the magnetic bodies (22) point away from each other.

4. Method according to one of the preceding claims, wherein the rotor partial bodies (5, 7) are arranged to be rotated with respect to each other at an offset angle α in relation to the axis of rotation (10).

5. Method according to one of the preceding claims, wherein the rotor partial bodies (5, 7) are provided respectively as stacks of sheets having a plurality of sheet layers (11).

6. Electrical machine (3) comprising a rotor (1) which can be rotated about an axis of rotation (10) and comprises at least two rotor partial bodies (5, 7), each having a number of receiving pockets (15) which are introduced in the axial direction (13),
- wherein the receiving pockets (15) are introduced into the rotor partial bodies (5, 7) in an axial punching direction (20, 21),
- wherein respective magnetic bodies (22) are pressed in an axial pressing direction (17, 18) against the stamping direction (20, 21) into the receiving pockets (15) of the rotor partial bodies (5, 7), and
- wherein the rotor partial bodies (5, 7) are joined to each other in such a way that the pressing directions (17, 18) of the magnetic bodies (22) point away from each other.

7. Electrical machine (3) according to claim 6, wherein the receiving pockets (15) of one or each rotor partial body (5, 7) are respectively arranged to be distributed along the circumference of a circular path (19).

8. Electrical machine (3) according to claim 6 or 7, wherein the rotor partial bodies (5, 7) are arranged to be rotated with respect to each other at an offset angle α in relation to the axis of rotation (10).

9. Electrical machine (3) according to one of claims 6 to 8, wherein the rotor partial bodies (5, 7) are respectively produced as a stack of sheets having a plurality of sheet layers (11).

## Revendications

1. Procédé de fabrication d'un rotor (1) pouvant tourner autour d'un axe de rotation (10), procédé
- d'après lequel on réalise au moins deux corps partiels de rotor (5, 7) comprenant chacun respectivement un certain nombre de cavités d'accueil (15) y ayant été formées par découpage-poinçonnage dans une direction de découpage-poinçonnage axiale (20, 21),
- d'après lequel on insère à force, dans les cavités d'accueil (15) des corps partiels de rotor (5, 7), des corps d'aimant (22) respectifs, selon une direction de pressage axiale (17, 18) s'opposant à la direction de découpage-poinçonnage (20, 21), et
- d'après lequel on adjoint ou assemble les corps partiels de rotor (5, 7) de manière telle que les directions de pressage (17, 18) des corps d'aimant (22) s'éloignent mutuellement l'une de l'autre.

2. Procédé selon la revendication 1, d'après lequel un ou chaque corps partiel de rotor (5, 7) est réalisé de manière à comporter des cavités d'accueil (15) formées de manière réparties le long de la périphérie d'une trajectoire circulaire (19).

3. Procédé selon l'une des revendications précédentes, d'après lequel les corps d'aimant (22) sont pressés dans les corps partiels de rotor (5, 7) respectivement selon la même direction de pressage (17, 18), et d'après lequel on fait tourner, avant l'assemblage, au moins un corps partiel de rotor (5, 7) autour d'un axe (25) perpendiculaire à l'axe de rotation (10), de manière à ce que les directions de pressage (17, 18) des corps d'aimant (22) s'éloignent mutuellement l'une de l'autre.

4. Procédé selon l'une des revendications précédentes, d'après lequel on agence les corps partiels de rotor (5, 7), en se référant à l'axe de rotation (10), de manière à ce qu'ils soient mutuellement décalés en rotation d'un angle de décalage α.

5. Procédé selon l'une des revendications précédentes, d'après lequel on réalise les corps partiels de rotor (5, 7) chacun sous la forme d'un paquet de tôles comprenant une pluralité de couches de tôle (11).

6. Machine électrique (3) comprenant un rotor (1), qui peut tourner autour d'un axe de rotation (10) et comporte au moins deux corps partiels de rotor (5, 7) avec chacun un certain nombre de cavités d'accueil (15) y ayant été réalisées dans la direction axiale (13), machine électrique
- dans laquelle les cavités d'accueil (15) sont formées dans les corps partiels de rotor (5, 7) selon une direction de découpage-poinçonnage axiale (20, 21),
- dans laquelle dans les cavités d'accueil (15) des corps partiels de rotor (5, 7), sont pressés respectivement des corps d'aimant (22), selon une direction de pressage axiale (17, 18) s'opposant à la direction de découpage-poinçonnage (20, 21), et
- dans laquelle les corps partiels de rotor (5, 7) sont adjoints ou assemblés de manière telle que les directions de pressage (17, 18) des corps d'aimant (22) s'éloignent mutuellement l'une de l'autre.

7. Machine électrique (3) selon la revendication 6, dans laquelle les cavités d'accueil (15) d'un ou de chaque corps partiel de rotor (5, 7), sont agencées respectivement de manière répartie le long de la périphérie d'une trajectoire circulaire (19).

8. Machine électrique (3) selon la revendication 6 ou la revendication 7, dans laquelle les corps partiels de rotor (5, 7) sont agencés, en se référant à l'axe de rotation (10), de manière à ce qu'ils soient mutuellement décalés en rotation d'un angle de décalage α.

9. Machine électrique (3) selon l'une des revendications 6 à 8, dans laquelle les corps partiels de rotor (5, 7) sont fabriqués chacun sous la forme d'un paquet de tôles comprenant une pluralité de couches de tôle (11).
